# EUROPEAN PATENT APPLICATION

(11) **EP 1 484 809 A1**
(43) Date of publication of application: **08.12.2004**
(21) Application number: 02758811.0
(22) Date of filing: 08.08.2002
(51) Int. Cl.: H01M 4/02, H01M 10/40, H01M 4/60, H01G 9/058

(54) **REDOX ACTIVE REVERSIBLE ELECTRODE AND NOVEL CELL USING IT**

(30) Priority: 07.02.2002 JP 2002031472
(71) Applicant: Oyama, Noboru, Musashino-shi, Tokyo 180-0002 (JP); FUJI JUKOGYO KABUSHIKI KAISHA, Tokyo 160-0023 (JP); MITSUI & CO., LTD., Chiyoda-ku Tokyo-to 100-0004 (JP); Shirouma Science Co., Ltd., Shimoniikawa-gun, Toyama 939-0643 (JP)
(72) Inventor: OYAMA, Noboru, Musashino-shi, Tokyo 180-0002 (JP); MATSUKAWA, Miyuki, Mitaka-shi, Tokyo 181-0011 (JP); SHIMOMURA, Takeshi, Isehara-shi, Kanagawa 259-1114 (JP); YAMAGUCHI, Shuichiro, Hiratsuka-shi, Kanagawa 254-0911 (JP)
(74) Representative: Jennings, Nigel Robin
(86) International application number: PCT/JP2002/008122
(87) International publication number: WO 2003/067687

(57) **Abstract**

A redox active reversible electrode includes a conductive substrate and a redox active film formed on at least one surface of the conductive substrate. The redox active film contains a redox active sulfur compound and an electrically conductive polymer of a π electron conjugated compound having p-type doping characteristics.

## Description

### Technical Field

The present invention relates to a redox active (oxidation-reduction active) reversible electrode employed in an electrochemical device such as a battery or a capacitor, and more specifically to a redox active electrode having a redox active film capable of a rapid electron and charge transfer reaction, formed on an electrically conductive substrate. Further, the present invention relates to a lithium secondary battery, a pseudo capacitor and a pseudo secondary battery (to be called as redox secondary battery herein), which employ such a redox active electrode. In particular, the present invention relates to a positive electrode employed in a lithium secondary battery suitable as a power source for a mobile phone or an electric automobile, which requires a high energy density. The lithium secondary battery and redox secondary battery of the present invention can also exhibit capacitor properties.

### Background Art

Conventional lithium secondary batteries employ, as their positive electrodes, a lithium inorganic metal oxide such as lithium cobaltate (LiCoO₂), lithium nickel oxide (LiNiO₂) or lithium manganate (LiMn₂O₄), and a carbon-based material as their negative electrodes. It is known that these positive electrode materials have a theoretical capacity of the energy density of 100 to 150 Ah/kg, whereas that of the negative electrode material has a value three times or more of that of the positive electrode (370 to 800 Ah/kg in the case of a carbon material).

Thus, in order to make a high-performance lithium secondary battery, it is a pressing need to develop a new material for a positive electrode capable of having a high energy density. On the other hand, as a way of raising the level of safety of the lithium secondary battery, it is becoming a focus of attention to use a sulfur compound in place of the lithium-based metal oxide as the positive material. In general, sulfur compounds exhibit an oxidation-reduction reaction activity, and have a high energy accumulating capability at a high energy density. This is because the oxidation state of the sulfur atom as the redox center is able to take a value from -2 to +6, and therefore a high energy accumulation can be achieved by utilizing a multiple electron transfer reaction. However, the electron transfer reaction of a sulfur compound is slow at room temperature, and therefore it is conventionally difficult to use the material as it is as a material for a positive electrode.

Recently, Oyama, one of the inventors of the present invention, has reported as an example of the solution to the just-described drawback a material for a positive electrode, which is made of a composite material of 2,5-dimercapto-1,3,4-thiadiazol (DMcT) with polyaniline (N. Oyama, et al., Nature, Vol. 373, 598-600 (1995)). The positive electrode material comprising this composite exhibits a high electron transfer reaction rate at room temperature. It is considered that this is because polyaniline, which is a conductive polymer, serves to accelerate the oxidation-reduction reaction of the organic sulfur compound.

In the meantime, the conventional capacitors are categorized into the following three types: (1) one that utilizes an electric double layer created at an interface between an activated carbon polarizable electrode and the electrolyte, (2) one that utilizes p-type and n-type doping of an electrically conductive polymer, and (3) one that uses a metal oxide, in which charges are accumulated by adsorption of ion species on the surface of the electrode as well as the oxidation-reduction of the metal electrode. These capacitors can provide a high power output instantaneously as compared to the case of lithium ion batteries, but each of them has a low energy density (10 to 100 Wh/kg) and is not long-persisting its output. Further, they have low output potentials per unit capacitor cell (1.0 to 2.5V) and exhibit such behaviors that the output potential decreases in proportion to the discharged charge amount.

Therefore, in the development of a new capacitor, there is a demand for an electrode material that exhibits such a high capacity density equivalent to that of the lithium secondary battery to appear. On the other hand, in terms of the lithium secondary battery, there is a demand for an electrode material from which a large current can be passed relatively instantaneously.

It has been found that the organic sulfur compound exhibits such properties of having a high energy density, but a battery that uses the organic sulfur compound and polyaniline does not easily increase in its current that can be passed per unit weight. The main causes for this are, for example, as follows. The organic sulfur compound has no or low electrical conductivity, and therefore it cannot function as an electrode unless the compound material is formed into a thin film having a thickness of several µm to several tens of µm. Polyaniline turns into a reduced form at a relatively high potential, losing its conductivity. Protons are involved in the oxidation-reduction response, making it complicated. The ability of the sulfur compound as a catalyst to the oxidation-reduction reaction greatly depends upon the acidity of the electrolyte, that is, the proton concentration, and therefore it is difficult to select the optimal conditions for the reaction.

Accordingly, an object of the present invention is to provide a positive electrode material, and in particular a positive electrode for a lithium secondary battery that can efficiently utilize the high energy density that a sulfur compound inherently possesses, overcoming the drawbacks of the prior art.

Another object of the present invention is to provide a positive electrode for a non-lithium redox secondary battery from which a large current can be passed relatively instantaneously by using it in combination with a negative electrode of a non-lithium material.

Still another object of the present invention is to provide a redox device that employs such an electrode.

### Disclosure of Invention

In order to use a sulfur compound (sulfide compound) as an active material for a positive electrode of a lithium secondary battery, it is necessary that an electrically conductive polymer of a π conjugated compound, which has an oxidation-reduction reactivity so as to pass a current with a high energy density that the sulfur compound inherently possesses, a high electron conductivity in a wide potential range and a high electron transfer promotion effect on the oxidation reduction reaction of a thiol group and a sulfide group, be made to coexist with the sulfur compound or composited with the sulfur compound.

The material to be made coexist or composited with the sulfur compound is an electrically conductive polymer of a π conjugated system, and especially, polypyrrole and polythiophene are selected as candidates. Here, it is preferable that the polymer material is chemically stable in a wide potential region, especially, even at a high potential (for example, 4V (vs. Li/Li⁺) in the presence of an organic solvent that constitutes the electrolyte. Further, it is preferable that the polymer material is chemically stable in a wide temperature region, especially even at a high temperature. As such a stable polymer material, a compound in which two electron-donating oxygen atoms are coupled to a thiophene ring has been proposed as the material used for an electrolytic capacitor (See Japanese Patent No. 304011). In particular, an electrode coated with a thin film of poly(3,4-ethylenedioxythiophene (also known as polymer of 2, 3-dihydroxythieno(3, 4-b)(1,4)dioxin-5,7-diyl) (abbreviated as: PEDOT) exhibits a flat and stable response to the charging current in a potential region of 2.0 to 4.9V (vs. Li/Li⁺) in an acetonitrile solution containing 1.0M LiClO₄. Further, it is known that a polymer thin film doped with anions exhibits a high electron conductivity of 200 S/cm or higher (See C. Kvarnstrom et al., vol. 44, 2739-2750 (1999)).

However, these materials entail such a drawback that a definite faradaic current response based on the redox reaction cannot be obtained at a certain constant potential. In other words, a PEDOT exhibits excellent properties as a solid electrolyte for a capacitor, but a large current cannot be continuously passed at a constant output potential such as in the case of a secondary battery. Further, a polythiophene derivative such as PEDOT has such a property that it starts doping of anions at a relatively low potential of, for example, +2.6V (vs. Li/Li⁺). Furthermore, in the case of such a polythiophene thin film under its oxidation state controlled at this potential, the most of the electrochemically active site seems to be in a reduced state. If the electrode coated with this thin film is immersed in an organic solvent-based electrolyte, the open circuit equilibrium potential value is 3.1V (vs. Li/Li⁺). Here, the electrode reduces the water impurity that is present in a small amount in the electrolyte, whereas the electrode itself turns into its oxidized state. In other words, this thin film exhibits such properties of a strong reducing power. As described above, a polythiophene derivative polymer such as PEDOT has the following characteristics and properties. For example, (a) it is chemically stable in a wide potential range and temperature region; (b) it exhibits a high electron conductivity, (c) it does not clearly exhibit a faradaic oxidation-reduction response, (d) p-type doping can be started at a low potential, and (e) it has a strong oxidation-reduction catalytic activity.

On the other hand, a sulfur compound has an oxidation-reduction reactivity, exhibits a large faradaic current response and has a capability of accumulating energy at a high density; however its electron transfer reaction is slow and a thin film made of this material has no electron conductivity. However, many of the sulfur compounds are in a negatively charged state while in the reduced form, and therefore it is easy to carry out p-type doping on them. Further, some of the sulfur compounds have a thermodynamic equilibrium oxidation-reduction potential close to 3.0±0.5V (vs. Li/Li⁺) and there is a possibility that the electron transfer reaction can be promoted thermodynamically with polythiophene.

The present invention is based on the above-described findings.

Thus, according to the present invention, there is provided a redox active reversible electrode comprising an electrically conductive substrate and a redox active film formed on at least one surface of the substrate, wherein the redox active film comprises a sulfur compound and an electrically conductive polymer of a π electron conjugated compound having p-type doping characteristics.

In the present invention, the redox active film can be made by doping the electrically conductive polymer material of π electron conjugated compound with the sulfur compound to form a composite. Alternatively, the redox active film can be made by mixing the electrically conductive polymer material and the sulfur compound together and then dispersing electrically conductive particles in the mixture.

Further, according to the present invention, there is provided a lithium secondary battery or a quasi-secondary batter (redox secondary battery) comprising a positive electrode, a lithium negative electrode or a non-lithium negative electrode and an electrolyte layer interposed between the positive electrode and the negative electrode, wherein the positive electrode is provided by the redox active reversible electrode according to the present invention.

Furthermore, according to the present invention, there is provided a lithium device comprising a positive electrode, a lithium negative electrode and an electrolyte layer interposed between the positive electrode and the negative electrode, the positive electrode being provided by the redox active reversible electrode according to the present invention, wherein the lithium device is capable of also exhibiting capacitor properties by controlling an applied potential and/or cut-off potential during charging.

In the lithium secondary battery and non-lithium redox secondary battery of the present invention, it is preferable that the negative electrode is made of a material that absorbs/releases lithium ions or a non-lithium material that can absorb (n-type doping)/release alkylammonium cations, which will be later explained in detail.

### Brief Description of Drawings

FIG. 1 is a cross sectional view schematically showing a basic structure of a redox active reversible electrode according to an embodiment of the present invention;
FIG. 2 is a cross sectional view schematically showing a basic structure of a redox device according to an embodiment of the present invention;
FIGS. 3A and 3B are cyclic voltammograms showing a redox response of an electrolytically polymerized film coated electrode prepared in Example 1, which will be described in detail below;
FIGS. 4A and 4B are cyclic voltammograms showing a redox response measured in Example 2, which will be described in detail below, in the case where 2,5-dimethylcapto-1,3,4-thiadiazole (DMcT) is contained in the electrolyte;
FIG. 5 is a hydrodynamic voltammogram showing a redox response of 2,5-dimethylcapto-1,3,4-thiadiazole (DMcT) in the electrolyte measured in Example 3, which will be described in detail below; and
FIG. 6 is a chronopontentiogram showing charge-discharge characteristics of a polythiophene (PEDOT)/DMcT composite electrode according to the present invention.

### Best Mode for Carrying Out the Invention

The present invention will now be described in more detail.

The redox active reversible electrode of the present invention has a redox active film on a surface of an electrically conductive substrate. The redox active film of the present invention comprises a redox active sulfur compound and an electrically conductive polymeric material (polymer) of a π electron conjugated system having p-type doping characteristics.

As the electrically conductive polymer of a π electron conjugated compound having p-type doping characteristics used in the present invention, polythiophene compounds (a polymer compounds having repeating units containing a thiophene skeleton (thiophene or its derivative)) are preferred.

Such polythiophene compounds include a polythiophene compound containing a repeating unit represented by the following formula (I):

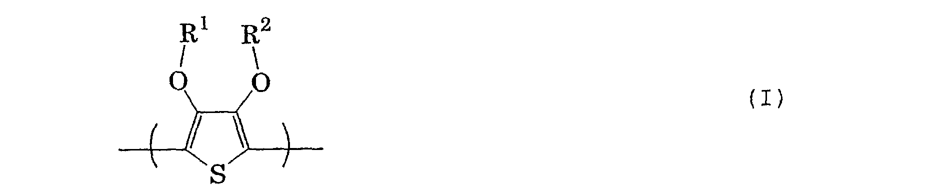

In the formula (I), R¹ and R² are independently a hydrogen or an alkyl groups having 1 to 4 carbon atoms, or may bond to each other to form an alkylene group having 1 to 4 carbon atoms, 1,2-cyclohexene group or o-xylylene group, which may be substituted. Of these polythiophene compounds, PEDOT is particularly preferable. These polythiophene compounds can be obtained by oxidative polymerization of a thiophene compound represented by the following formula (II):

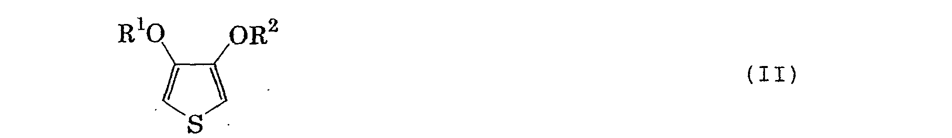

In the formula (II), R¹ and R² have the same meanings as those of R¹ and R² in the formula (I), respectively. A particularly preferable example of the thiophene compound represented by the formula (II) is 3,4-ethylenedioxythiophene (EDOT).

In the formula (I), where R¹ and R² bond to each other to form an alkylene group having 1 to 4 carbon atoms, examples of the substituent group on the alkylene group are a C₁ to C₁₄ alkyl group, a phenyl group, a hydroxymethyl group, -CH₂O-(CH₂CH₂)₃-TTF group (where TTF is a monovalent group derived from a tetrathiafulvalene compound; the same applies to the following cases), -CH₂O-(CH₂CH₂O)₅-CH₂CH₂-TTF group,
-CH₂O-(CH₂CH₂)₃-S-TTF group,
-CH₂O-(CH₂CH₂O)₅-CH₂CH₂-S-TFT group, and -CH₂O(CH₂)₃SO₃-Na⁺ group. More specifically, the polythiophene compound includes a polymer compound containing a repeting unit represented by the following formula (III): 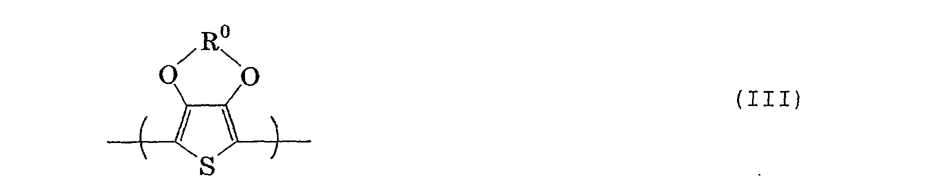 In the formula (III), R⁰ represents -(CH₂)₂-, -CH₂CH(CH₃)-, -CH₂CH(C₆H₁₃)-, -CH₂CH(C₁₀H₂₁)-, -CH₂CH(C₁₄H₂₉)-, -CH₂CH(phenyl)-, -(CH₂)₃-, -CH₂CH(CH₃)CH₂-, -(CH₂)₄-, o-xylene, -CH₂CH(OH)-, -CH₂CH(CH₂O-(CH₂CH₂)₃-S-trimethylthiotetrathiafulvalene)-, -CH₂CH(CH₂O-(CH₂CH₂O)₅-CH₂CH₂-S-trimethylthiotetrathiafulvalene)-, or -CH₂CH(CH₂O(CH₂)₃SO₃-Na⁺)-. These polymer compounds are described together with their preparation methods in documents (for example, Synthetic Metals, vol. 118, 105-109 (2001); Chem. Mater., vol. 10, 896-902 (1998); Adv. Mater., vol. 13, 1249-1252 (2001); Synthetic Metals, vol. 125, 441-444 (2002); and Macromolecules, vol. 29, 7629-7630 (1996)).

As the electrically conductive polymer of the π electron conjugated material used in the present invention, use may also be made of polymers derived from the oxidative polymerization of: (E)-1,2-bis(2-(3,4-ethylenedioxy)thienyl)vinylene, 1,4-bis(2-(3,4-ethylenedioxy)thienyl)benzene, 4,4'-bis(2-(3,4-ethylenedioxy)thienyl)biphenyl, 2,5-bis(2-(3,4-ethylenedioxy)thienyl)furan, 2,5-bis(2-(3,4-ethylenedioxy)thienyl)thiophene, or 2,2':5',2"-ter(3,4-ethylenedioxy)thiophene. These polymer compounds are described together with their preparation methods in documents (for example, Chem. Mater., vol. 8, 882-889 (1996)).

In general, the polythiophene compound used in the present invention can be obtained in the form of a thin film or powder by a chemical oxidative polymerization method using a chemical oxidizer or an electro-oxidative polymerization method. The chemical polymerization method is described in detail in Japanese Patent No. 3040113 mentioned above. That is, a thiophene compound such as dialkoxythiophene represented by the formula (II) and a chemical oxidizer are provided, preferably in the form of solutions, one after another, or preferably altogether, on a surface of a carbon thin film or a metal foil, which is used as a current collector (electrically conductive substrate). Then, the coating is heated if necessary depending on the activity of the oxidizer used to complete the oxididative polymerization. In this manner, the compound is formed directly on the current collector (electrically conductive substrate) as a thin film.

As described above, the thiophene compound used as the positive electrode active material can be polymerized by a chemical oxidative polymerization using various oxidizers from a corresponding monomer or dimmer as a starting material. This chemical oxidative polymerization is preferably carried out especially with use of potassium permanganate or potassium dichromate in a mixed solvent of methanol and water. For example, a dialkoxythiophene represented by the formula (II), such as 3,4-ethylenedioxythiophene (EDOT) is dissolved in a water-methanol mixed solvent, and to the resultant solution, a methanol solution of potassium permanganate (KMnO₄) is added dropwise. The mixture is reacted for about an hour at at a low temperature (for example, 0 to -5°C). Then, perchloric acid is added, and the mixture is further reacted. Thus, a dark blue product can be obtained. The thus obtained reaction mixture is separated by centrifugal separation. Then, water is added to the separated product and the centrifugal separation is repeated. The separation is repeated until excessive acid is removed from the reaction mixture solution, and thus dark blue powder of PEDOT can be obtained.

Alternatively, a thiophene compound can be polymerized using xerogel (VX) of vanadium pentoxide (V₂O₅) in an aqueous solution, and the resultant polymer is obtained in the form of powder. In this case, an aqueous solution of vanadium pentoxide xerogel and a thiophene compound represented by the formula (II), such as dialkoxythiophene are mixed together and the resultant solution is stirred to polymerize the thiophene compound between VXs, and the mixture is filtrated. Since VX is dissolved into an alkaline solution, an alkaline solution is added to thus obtained filtration residue to dissolve VX, and thus the polythiophene compound can be isolated.

In the electro-oxidative polymerization method, a thiophene compound (monomer) represented by the formula (II) such as a dialkoxythiophene is dissolved into an electrolyte solution consisting of, for example, a nitrile solvent such as acetonitrile (AN), benzonitrile or butyronitrile, or a propylenecarbonate (PC) solvent, containing 0.1M to 1.0M of a lithium salt as a supporting electrolyte salt, and the resultant solution can be used as the polymerizing solution. With a carbon electrode or a metal foil electrode as a current collector (conductive substrate) used as a working electrode, and a platinum wire used as a counter electrode and a silver/silver ion electrode or a lithium metal foil used as a reference electrode, a constant potential or a potential sweeping is applied to the working electrode to induce a polymerization reaction on the surface of the working electrode, thereby forming a thin film. Alternatively, a desired polymer can be obtained by a respective method described in the documents listed above.

The redox active sulfur compound used in the present invention may be an inorganic sulfur compound or an organic sulfur compound. As such a sulfur compound, use may be made of a carbon disulfide compound represented by (S)ₓ^{m-} (where x is 1 to 8 and m is 0 to 2) or (SCS)ₙ (where n is 1 to 10), 2-mercaptoethylether, 2-mercaptroethylsulfide, 1,2-ethanediole, tetrathioethylenediamine, N,N'-dithio-N,N'-dimethylethylenediamine, trithiocyanuric acid, 2,4-dithiopyridine, 4,5-diamino-2,6-dimethylmercaptopyridine, N,N'-dimercaptopiperazine, 2,5-dimercapto-1,3,4-thiadiazole (DMcT), etc. Further, those compounds represented by the following formulas (1) to (5) can be used as such a sulfur compound:

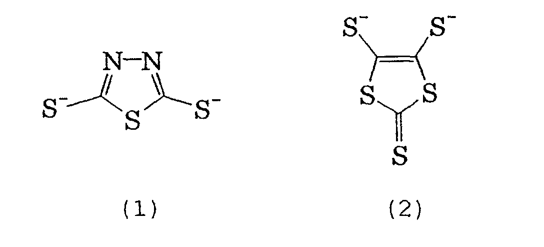

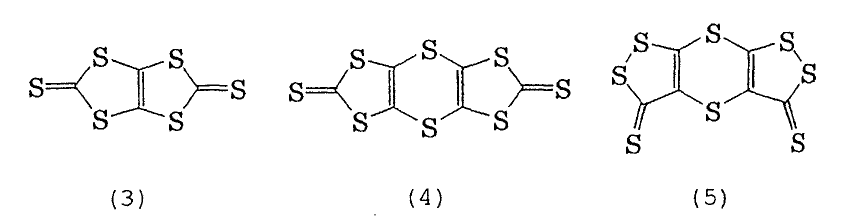

These sulfur compounds can be used as such or in the form of an oligomer. Further, as the sulfur compound, dodecylbenzenesulfonate or tosylate can be used as well. In the case where the redox active reversible electrode formed using 2,5-dimethylcapto-1,3,4-thiadiazole (DMcT) among these sulfur compounds is incorporated in a lithium secondary battery, particularly excellent charge-discharge characteristics can be obtained.

The polythiophene compound formed on the conductive electrode substrate by the above-described method can be doped with the sulfur compound to form a composite, thereby providing a reversible thin film electrode having a redox activity. Here, the doping with the sulfur compound can be easily performed by immersing a conductive substrate (electrode) coated with the polythiophene into an electrolyte solution in which the sulfur compound is dissolved, and an appropriate potential is applied to this electrode as a working electrode at a constant value or by potential sweeping. The composite film obtained after the doping with the sulfur compound exhibits an oxidation-reduction wave corresponding to the reversible redox response of the sulfur compound.

The redox active thin film of the present invention can also be prepared in the following manner. That is, a sulfur compound, especially, that represented by the formulas (1) to (5), is mixed, in the form of liquid or solid powder, with powder of the polythiophene derivative, and then appropriate amounts of electrically conductive fine particles and a binder are further mixed thereinto. The resultant mixture is coated onto the current collector substrate and then subjected to pressure molding. With the thus prepared electrode, it is possible to pass a practically applicable large current as, for example, 0.1 to 3 mA/cm², from an initial stage of charging-discharging even at a room temperature.

The conductive fine particles are made of a material having an electron conductivity. Examples of the electron conductive material are metals such as copper, iron, silver, nickel, palladium, gold, platinum, indium and tungsten, conductive metal oxides such as indium oxide and tin oxide, and carbon. These conductive fine particles is preferably made of silver, palladium, nickel, gold or copper, and a mixture of different type conductive fine particles can be used as well. It is preferable that the conductive fine particles have an average diameter size of 0.2 nm to 100 nm, and more preferably, an average diameter size of 2 to 20 nm. The average size of the conductive ultra-fine particles can be measured by a laser Doppler-type particle diameter measuring method. It is preferable that the conductive ultra-fine particles are contained in an amount of 1 to 15% by weight in the redox active thin film.

The substrate (current collector) that supports the redox active film of the present invention is an electrically conductive substrate that exhibits an electrical conductivity on at least a surface that is brought into contact with the redox active film. This substrate can be made of an electrically conductive material such as a metal, an electrically conductive metal oxide or carbon, and it is preferably made of copper, carbon, gold, aluminum or an alloy of any of these. Alternatively, it is possible to provide an electrically conductive substrate by coating the substrate body made of the other material with the electrically conductive material. Further, the conductive substrate may have an unevenness of the surfaces or may be of a net-like structure.

In either case of the doping and mixing, the redox active sulfur compound is desirably contained in an amount of 30 to 80% of the total weight of the conductive polymer of the π electron conjugated compound and the redox active sulfur compound.

In a redox active thin film made of a composite prepared by doping a polythiophene derivative of the π electron conjugated conductive polymer with a redox active sulfur compound, a fast electron transfer reaction can be achieved within the redox active thin film and at the interface between the redox active thin film and the current collector due to the electron transfer promotion effect for the redox reaction of the sulfide compound. This is due to the enhancement of the electron conductivity in the film, the promoting effect on the reaction forming the dithioether bond (-S-S-) by the oxidation reaction of the thiol group and on the reductive dissociation reaction of the dithioether bond, and the increase in its reaction surface area (surface area of the collector). The increase in the surface area of the collector promotes apparent electron transfer reaction (electrode reaction) near the electrode interface.

In the present invention, it is preferable that the redox active thin film have a thickness of 10 to 120 µm. Further, the conductive substrate preferably has a thickness of 1 to 40 µm. In the case where the sulfur compound or electrically conductive polymer is used in the form of powder, the particle diameter size of each of these powders is preferably smaller than the thickness of the redox active thin film.

It is preferable that the redox active reversible electrode of the present invention is used as a positive electrode of a lithium secondary battery in particular. A lithium secondary battery includes a positive electrode and a lithium negative electrode, and an electrolyte layer is interposed between them. In the lithium secondary battery of the present invention, the positive electrode is provided a redox active reversible electrode according to the present invention. The lithium negative electrode can be made of a lithium-based metallic material such as metal lithium or a lithium alloy (for example, Li-Ai alloy), or a lithium intercalation carbon material. It is preferable that the lithium-based metal material is used in the form of foil in order to reduce the weight of the battery. The lithium-based negative electrode preferably has a thickness of 5 µm to 200 µm. It should be noted that usually, a conductive substrate (preferably having a thickness of 1 µm to 40 µm) serving as a current collector is connected to the lithium-based negative electrode. The electrolyte layer interposed between the positive electrode and negative electrode is made of a polymer gel containing an electrolyte solution (polymer gel electrolyte). As the electrolyte contained in the above-described polymer electrolyte, lithium salts such as CF₃SO₃Li, C₄F₉SO₈Li, (CF₃SO₂)₂NLi, (CF₃SO₂)₃CLi, LiBF₄, LiPF₆ and LiClO₄ may be used. It is preferable that the solvent which dissolves these electrolytes is a non-aqueous solvent. Such a non-aqueous solvent includes a chain carbonate, a cyclic carbonate, a cyclic ester, a nitrile compound, an acid anhydrate, an amide compound, a phosphate compound and an amine compound. Specific examples of the non-aqueous solvent are propylene carbonate, dimethoxyethane, γ-butyrolactone, N-methyl-2-pyrrolidinone, N,N'-dimethylacetamide, a mixture of propylenecarbonate and dimethoxyethane and a mixture of sulfolane and tetrahydrofuran.

As the polymer gel, it is preferable that a copolymer of acrylonitrile with methyl acrylate or methacrylate is used. The polymer gel electrolyte can be obtained by immersing the polymer in the electrolyte solution or polymerizing the structural component (monomer/compound) of the polymer in the presence of the electrolyte solution. Alternatively, a novel polyolefin-based gel, which has been proposed by one of the present inventors, Oyama and others, can be suitably used (See Oyama et al., Jpn. Pat. Appln. No. 2001-320319.) The polymer that constitutes this polyolefin-based gel is a non-crosslinked polymer in which a compound comprising an oligomer of polyethylene oxide such as polyethylene glycol is grafted to the polyethylene in an amount of about 10% by mole of the polyethylene. This polymer has an entirely different property from that of a non-grafted polyethylene and it absorbs a large amount of an organic electrolyte solution to be formed into a gel, which has a capability of holding the absorbed solution. Thus, by immersing the polymer into the electrolyte solution, a gel electrolyte can be obtained.

The redox active reversible electrode of the present invention can be used not only as a positive electrode of a lithium secondary battery, but also as a positive electrode of a non-lithium battery (redox secondary battery) that includes a negative electrode made of a conductive polymer material or a carbon material such as an activated carbon material, which can be reversibly doped or dedoped with non-lithium ions. This redox secondary battery includes a positive electrode and a non-lithium negative electrode, and an electrolyte layer is introduced between them. The non-lithium electrode is made of a carbon material that can be reversibly doped or dedoped with alkylammonium ions. As the negative electrode material, use may be preferably made of a polyacene, a polythiophene derivative, a high-purity activated carbon and a carbon nanotube, which can smoothly undergo n-type doping. It is preferable that the negative electrode material has a thickness of 5 µm to 200 µm, and usually, it can be formed on an electrically conductive substrate (preferably having a thickness of 1 µm to 40 µm) that functions as a current collector such as a nickel foil or a copper foil. The electrolyte layer interposed between the positive electrode and the negative electrode is preferably made of a polymer gel containing an electrolyte solution (polymer gel electrolyte). The electrolyte contained in the polymer electrolyte, use may be made of BF₄⁻ salts, PF6- salts, dodecylbenzenesulfonate salts and tolcylate salts of a quaternary alkylammonium such as tetraethylammonium tetrafluoroborate or triethylmethylammonium tetrafluoroborate. It is preferable that the solvent that dissolves these electrolytes is a non-aqueous solvent. As the non-aqueous solvent, use may be made of the nitrile compound, the carbonate compound, and the like, as well as a mixture of these, which as been described for the lithium secondary battery. As the polymer gel electrolyte, the materials mentioned above in connection with the lithium secondary battery can be used.

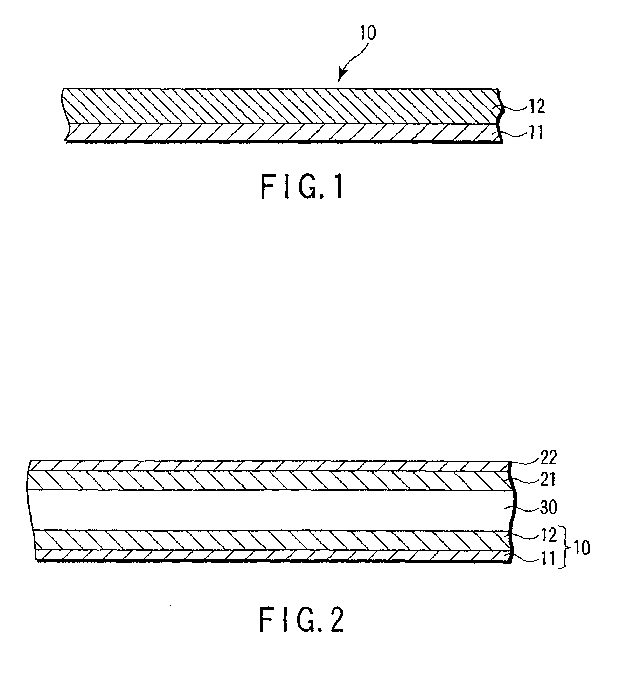

FIG. 1 is a cross-sectional view schematically showing the basic structure of a redox active reversible electrode according to an embodiment of the present invention. A redox active reversible electrode 10 shown in FIG. 1 includes an electrically conductive substrate 11. A redox active thin film 12 according to the present invention is formed on at least one surface of the conductive substrate 11. The conductive substrate 11 is as has been described above in detail, and it can take such a form of, for example, a rectangular or circular thin flat plate having two opposed main surfaces. The redox active thin film 12 is as has been described above in detail. Usually, the redox active thin film 12 can be formed on at least one of the main surfaces of the conductive substrate 11.

FIG. 2 is a cross-sectional view schematically showing the basic structure of a redox device such as a lithium secondary battery or a redox secondary battery according to an embodiment of the present invention. The redox device shown in FIG. 2 includes a positive electrode 10, which is provided by the redox active reversible electrode shown in FIG. 1, and a negative electrode 21 arranged opposed to and spaced apart from the positive electrode 10. An electrolyte layer 30 is interposed between the positive electrode 10 and the negative electrode 21. The electrolyte layer 30 and the positive electrode 10 are as have been described above in detail. The positive electrode 10 is provided so that the redox active thin film 12 is brought into contact with the electrolyte layer 30. The current collector 22 such as of a nickel foil or a copper foil is provided on the negative electrode. The current collector 22 is as has been described above in detail.

In the case where the redox device shown in FIG. 2 is a lithium-based redox device such as a lithium secondary battery, the negative electrode 21 is provided by the lithium-based negative electrode described above.

In the case where the redox device shown in FIG. 2 is a non-lithium redox device such as a redox secondary battery, the negative electrode 21 is provided by the non-lithium negative electrode described above.

As described above, the redox device of the present invention is capable of exhibiting capacitor properties in addition to the characteristics as a secondary battery, by controlling the applied potential and/or cutoff potential during charging.

The present invention will now be described with reference to examples; however the invention should not be limited to these examples.

First, preparation examples of an electrode coated with a thin film of PEDOT which is a polythiophene, prepared with an electrolytic polymerization method, and the characteristics of the redox response thereof will be described. Next, it will be demonstrated with a cyclic voltammetry that the PEDOT thin film electrode has an electron transfer promoting effect on the redox reaction, i.e., both of the oxidation reaction and reduction reaction, of an organic sulfur compound, especially, DMcT. Further, it will be demonstrated with a convection voltammetry that a heterogenous electron transfer reaction occurs substantially reversibly (a rate constant of 10⁻⁴ cm/s or higher) between the surface of the PEDOT thin film and DMcT molecules. Lastly, it will be demonstrated that a composite thin film made of PEDOT and DMcT exhibits properties of the new positive electrode material of the lithium secondary battery. Further, it will be demonstrated that the positive electrode material of the present invention is capable of exhibiting the function of the capacitor properties that PEDOT has. It will be furthermore demonstrated that the positive electrode material of the present invention, when it is combined with the non-lithium negative electrode, exhibits the characteristics of the positive electrode material of the redox secondary battery.

### Example 1

An acetonitrile (AN) solution (solution for electrolytic polymerization) containing 20 mM of EDOT monomer among the thiophene compounds represented by the formula (II) and 0.1M of lithium perchlorate (LiClO₄) as a supporting electrolyte was prepared.

A PEDOT coated electrode was prepared in the following manner. Using a 3-electrode type cell, with a glassy carbon disk electrode having a diameter of 3 mm used as a working electrode, a coil platinum wire used as a counter electrode and a silver ion electrode used as a reference electrode, an electrolytic oxidative polymerization was carried out in the solution for electrolytic polymerization described above, thereby preparing a PEDOT coated electrode. The silver ion electrode was prepared by dissolving 0.5M silver perchlorate into the solvent (AN) used, and employing a commercially available holder with the solvent used as an inner solution. The glassy carbon disk electrode was used after polishing it with polishing alumina on a polishing cloth wetted with pure water, and then washing it with pure water and acetone, followed by drying. The electrochemical experiment was carried out using a potentiostat and a X-Y recorder.

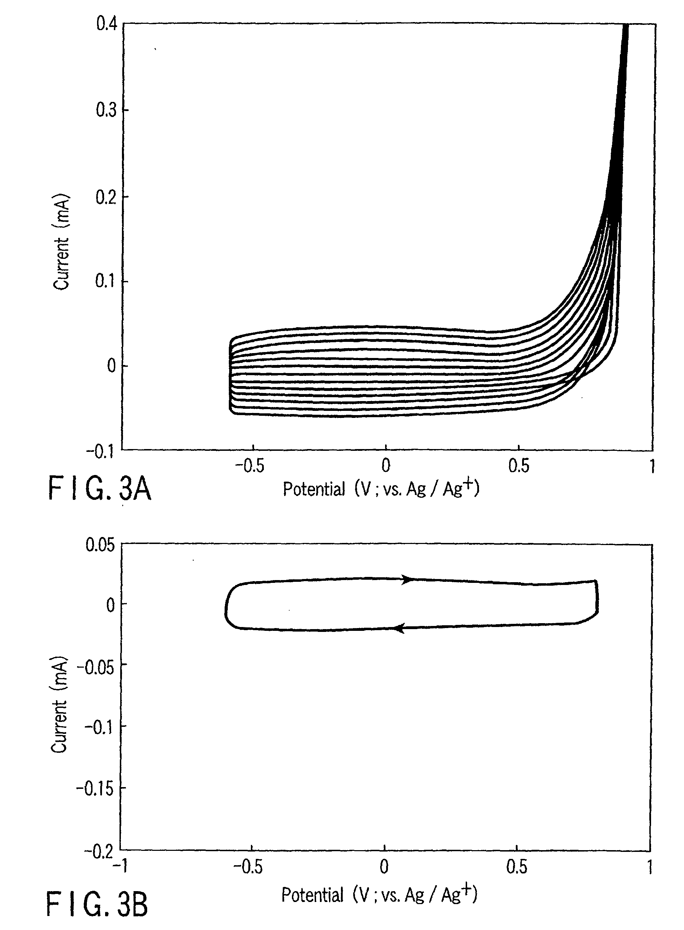

FIGS. 3A and 3B each are a cyclic voltammogram, wherein FIG. 3A is a cyclic voltammogram (to be abbreviated as CV hereinafter) showing electrolytic polymerization of PEDOT. It can be seen that in the first potential sweeping, an increase in oxidation current is observed at near +0.8V (vs. Ag / Ag⁺), which indicates that the EDOT monomer is oxidized on the glassy carbon electrode. It can be further seen that as the potential sweeping is repeated, an increase in the current is observed in a wide potential region, which indicates that a PEDOT thin film is generated by the oxidative polymerization. The quantity of electricity during the polymerization was set at 9 mC. The PEDOT thin film electrode prepared as above was immersed in an AN solution containing 0.1M LiClO₄, and its CV response was examined. FIG. 3B shows a CV of the PEDOT thin film in the AN solvent. When sweeping was conducted in a potential range of from -0.6V to +0.8V, a large and smooth charge current was observed, which indicates that the thin film has a high electron conductivity in this potential range.

### Example 2

As a typical example of the organic sulfur compound, 2,5-dimercapto-1,3,4-thiadiazole (DMcT) was selected. 1.0M LiBF₄ was dissolved into an AN solution of 1.0M LiClO₄, an N-methyl-2-pyrrolidinone (NMP) solution of 1.0M LiClO₄, and a solution obtained by mixing propylenecarbonate (PC) and ethylenecarbonate (EC) at a weight ratio of 1:1, each containing 5 mM of DMcT, to prepare an electrolytic solution. Subsequently, the glassy carbon electrode as the working electrode coated with the PEDOT film was prepared by the same method as the method of Example 1, using the electrolytic solutions prepared above. Then, the CV measurement was carried out.

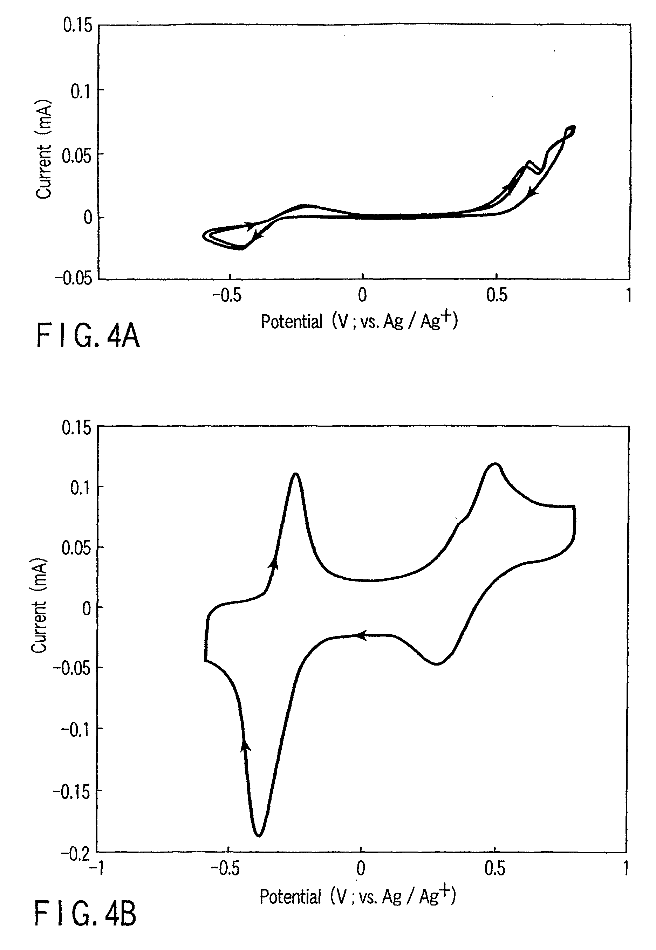

FIGS. 4A and 4B are CVs of DMcT, which were measured using a PEDOT uncoated electrode and the PEDOT coated electrode, respectively, in the AN electrolyte solution. The measurements were carried out while changing the potential sweeping range. The CVs obtained by performing potential sweeping in a range of from -0.6V to +0.8V are shown in FIGS. 4A and 4B, respectively. In the case where the PEDOT coated electrode was used, two new waves, which indicate reversible oxidation-reduction responses, were observed at -0.30V (an average value of the potential indicating an oxidation peak current and the potential indicating a reduction peak current) and at +0.4V. When the applied potential was held on a positive side from +0.8 to 1.2V for 3 minutes, the response of the new wave at -0.3V was remarkably increased. It is considered that the increase in the current response observed at a potential near -0.30V as shown in FIG. 4B was due to an oxidation of DMcT and a polymer thereof that were generated near the electrode. Depending on the time period of holding the applied potential and the value of potential, the response varies, which suggest that there are the optimal potential value, optimal hold time and the optimal concentration of dissolved DMcT with respect to the thickness of the PEDOT thin film, at which the current response increases at the maximum.

By contrast, FIG. 4A shows the CV response of DMcT, which was measured using the electrode that was not coated with PEDOT. Near -0.30V, a wave based on a reversible oxidation-reduction response was not observed. Further, even if the applied potential was held for 3 minutes at +0.8V of the positive potential, such a large reversible wave response observed at -0.30V as described above was not observed. The results of these observations indicate that near -0.3V, DMcT, which is anion, was doped into the PEDOT thin film, where DMcT was concentrated and fixed. The PEDOT film promotes the oxidation reaction of DMcT near -0.30V. Further, for the generated oxidation product, the reduction reaction to the reduced form was promoted at substantially near -0.30V by the thin film. In other words, the oxidation-reduction reaction of DMcT was promoted near -0.3V due to the presence of the PEDOT thin film, and it exhibited a faradaic reversible current response. Thus, DMcT can be used as an energy conversion material.

In place of the 1.0M LiClO₄ AN solution used in the preparation of the electrolyte solution in this example, other nitrile compound solutions of 1.0M LiClO₄, that is, benzonitrile and butyronitrile solutions, were used to perform the same experiment. The promoting effect of the PEDOT thin film on the redox response of DMcT was observed in each of these solvents. In particular, the activity obtained when using butylonitrile was at the same level as that of the case where AN was used. Thus, in the case where solvents other than acetonitrile were used, the promoting effect of the PEDOT thin film on the redox response of DMcT was observed.

### Example 3

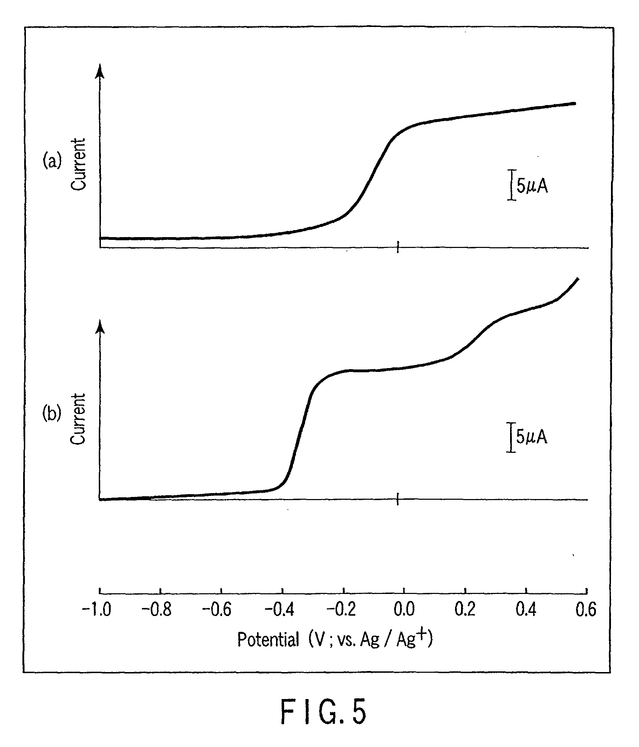

A solution used for measurement was prepared by adding DMcT to an NMP containing 0.1M LiClO₄ to make 2 mM DMcT solution. As the working electrode, a glassy carbon disk electrode (having a diameter of 3 mm) for the hydrodynamic voltammetry was used. In the same manner as that of Example 2, a PEDOT coated electrode was prepared. Using a coil platinum wire as the counter electrode and a silver ion electrode as the reference electrode, the measurements were carried out. FIG. 5 shows current-potential curves for the oxidation reaction of from a monomer to a dimmer of DMct obtained from a rotation speed of 400 rpm (number of rotation/min) at the PEDOT thin film and the uncoated electrode. The graph (a) in FIG. 5 is a current-potential curve obtained with use of the uncoated electrode. An increase in limiting current was observed as the rotation speed increased. Further, as the rotation speed increased, the half wave potential was shifted to the positive electrode side. The graph (b) in FIG. 5 is a current-potential curve obtained with use of the PEDOT coated electrode. As in the case of the graph (a), an increase in limiting current was observed as the rotation speed increased. A main difference between voltammograms (a) and (b) in FIG. 5 was that the half-wave value of potential obtained based on the oxidation reaction of DMcT in the uncoated electrode was +0.05V, whereas that of DMcT in the PEDOT coated thin film electrode was -0.30V, indicating that the potential was shifted by about 0.35V to the positive side. In other words, it can be seen that the oxidation reaction of DMcT was significantly promoted by the PEDOT thin film. Meanwhile, a log plot in which log[i/(iₗᵢₘ - i)] calculated from the current-potential curve was plotted against the potential, where iₗᵢₘ represents a limiting current value of a hydrodynamic voltammogram and i represents a current value flowing at a potential E, was performed. The results of the plot indicated that the slope of the log plot of the voltammogram obtained with the PEDOT coated electrode was 58 mV, and substantially the same slope was obtained even if the rotation speed of the electrode was varied. From the results, it was found that the oxidation reaction at -0.30V has a higher value than 10⁻⁴ cm/s for the rate constant of the standard heterogeneous electron transfer reaction (standard electrode reaction), and the electrode reaction can be called a reversible reaction system.

### Example 4

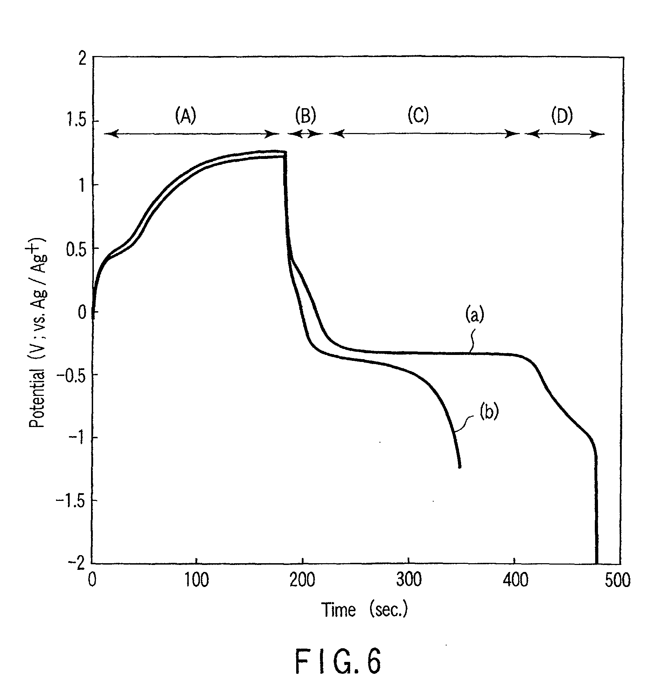

By the technique described in Example 2 above, a composite film electrode was prepared, in which the PEDOT film exhibiting the characteristics shown in FIG. 4B was doped with the oxidized form of DMcT. In order to examine the basic characteristics of the energy storing capability of thus prepared electrode, this electrode was immersed in an AN electrolyte solution of DMcT, which contained a supporting salt (0.1M LiClO₄) or an AN electrolyte solution containing only the supporting salt, and it was evaluated by chronopotentiometry with use of the same 3-electrode electrolytic cell as that used in Example 2 (FIG. 6). The charging was performed at a constant current mode of 1 mA/cm² for 3 minutes (region A in FIG. 6). Here, a potential of +1.3V was set as the cut-off potential. The discharging was performed at constant current densities of 0.2 and 1.0 mA/cm². A curve (a) that was obtained when discharged at 0.50 mA/cm² is described next. First, the output potential attenuated substantially linearly from +0.45V (which will be called region (B)). Next, in a range from near -0.30V to -0.35V (region (C)), the curve became substantially flattened and attenuated extremely moderately. On a negative side with respect to -0.35V, the output potential again attenuated linearly (region (D)). Then, on a further negative side with respect to -1.0V, the output potential dropped abruptly. In the region B, a non-faradaic discharge current that was generated from the PEDOT thin film was obtained, thus exhibiting the characteristics of a capacitor. In the region C, a faradaic discharge current was obtained, which indicated characteristics based on the redox reaction caused by DMcT. Further, in the region (D), a non-faradaic discharge current, which is similar to that of the region B, was obtained. To summarize, it was confirmed that the electrode material prepared here could exhibit the characteristics of both of a capacitor and a secondary battery (faradaic characteristics) by controlling the cut-off potential during charging and changing doping rate of DMcT to the PEDOT. Further, it was found that the ratio of the exhibited characteristics between them could be controlled. A curve (b) indicates a charge-discharge curve obtained when a constant current discharge mode of 1 mA/cm² was used at 25°C. As in the case of the curve (a), a flat output potential was obtained here. The charge-discharge efficiency was substantially 100%. From these results, it was confirmed that the composite electrode prepared here exhibits electrode characteristics of a high energy density and high power.

### Example 5

Activated carbon fibers having a specific surface are of 2000 m²/g were applied on a surface of an aluminum foil to have a thickness of 250 g/m², which was employed as an electrode substrate for the composite material of the present invention. A PEDOT/DMcT composite thin film was formed by the same method as that of Example 2 on the activated carbon fiber layer of the electrode substrate, thereby obtaining a positive electrode. Then, an electrolyte gel film of polyacrylonitrile (impregnated with 1.0M LiPF₆, PC + EC (weight ratio of 1:1) at a weight ratio of 75% with respect to the total weight), which had a thickness of 200 µm, was set on a metal lithium foil having a square shape of 3 × 3 cm and a thickness of 100 µm. Then, the positive electrode of the present invention was placed thereon to prepare an assembly. 2-mm-thick glass plates in which nickel foils are inserted for electrical connection were placed on both surfaces of the assembly, and the glass plates were fixed with clips, thereby preparing a cell for evaluation. It should be noted that the cell for evaluation was assembled in a glove box of an argon atmosphere. As the measurement device, BS-2500 from Keisoku Giken Co., Ltd. was used.

With use of the test cell prepared as above, a charge-discharge test was carried out at 20°C. In the test, the charging was carried out in a CC mode while setting the cut-off potential to 4.5V at a current density of 2.0 mA/4cm², and the discharging was carried out while setting the cut-off potential to 2.7V at a current density of 2.0 mA/4cm². The results exhibited the characteristics of a reversible battery having a high Coulomb efficiency of 90% or more at a high operating potential of 2.8 to 4.0V. Further, it was found that the cell exhibited the characteristics of a lithium secondary battery that had a flat output potential of 3.3V, and therefore the positive electrode material of the present invention was excellent as a material for a high-performance lithium secondary battery. The results further indicated that the cell, even after charging and discharging were repeated 20 times or more, maintained 90% or more of the initial properties.

### Example 6

From the results of the electrolytic oxidation in the acetonitrile solution of EDOT monomer, it is understood that the EDOT monomer can be oxidative-polymerized by using a relatively strong oxidizing agent having an oxidation-reduction potential of 1.2V (vs. hydrogen reference electrode) or higher. Examples of such an oxidizing agent are potassium permanganate and potassium dichromate. However, merely by oxidation with these oxidizing agents, only a polymer having a low conductivity and a low redox activity could be obtained. It was found that when the oxidative polymerization reaction of EDOT was allowed to occur at a low temperature, the polymerization reaction could be regulated at a higher degree.

First, 0.3g of EDOT was dissolved into 100 mL of a water-methanol mixed solvent (volume ratio of 155: 15). To this solution, total of 15 mL of a 0.17 N methanol solution of potassium permanganate was added dropwise, and the mixture was reacted at 0 to -5°C for one hour. Further, 0.4 mL of a commercially available concentrated perchloric acid (60% by volume) was added dropwise and the mixture was reacted at 0 to -5°C for one hour while strongly stirring the mixture. As a result, a floating dark blue solid material was generated in the solution. The solution containing thus generated solid material was transferred to a centrifugal separation tube, and separated into the solvent and solid material using a centrifugal separator. Then, the supernatant liquid was discarded. 50 mL of pure water was added to the solid material, and ultrasonic wave was applied onto the solid material using an ultrasonic cleaner to disperse it. After that, the centrifugal separation was carried out in a similar manner to that described above. Such an operation was repeated 6 times. From the fourth operation on, the pH value of the supernatant solution showed neutral. In this manner, an EDOT polymer was obtained. The amount of the EDOT polymer was about 0.2g and the yield was 60%. The EDOT polymer was dried overnight in a vacuum at 60°C, and used in the following test. The infrared absorption spectrum of the EDOT polymer thus chemically synthesized was measured, and it was found that it had the same absorption peak as that prepared by the electrolytic polymerization method. Therefore, it was concluded that these EDOT polymers had basically the same chemical structure.

The EDOT polymer obtained above was added to an N-methyl-2-pyrrolidinone solvent and the mixture was stirred well to dissolve the polymer, thus preparing a coating solution. Next, 1 to 10 µL of this coating solution was applied on a surface of a glassy carbon disk electrode having a diameter of 3 mm, and dried, thus preparing an electrode coated with an EDOT polymer film.

Thus obtained electrode for evaluation was evaluated in terms of its electrochemical properties using a three-electrode cell by a cyclic voltammetry method (to be abbreviated as CV hereinafter). The evaluation was carried out with a coil platinum wire used as the counter electrode and a silver/silver ion reference electrode used as the reference electrode. As the internal reference solution in the silver/silver ion reference electrode, a 0.05M acetonitrile solution of silver perchlorate was used.

The CV measurement was carried out in an acetonitrile solution containing 0.1M of NaClO₄ as the supporting electrolyte. It was found from the results of the measurement that the electrode exhibited substantially the same properties as those of Example 1 in which the measurement was carried out with use of the PEDOT electrode prepared by the electrolytic polymerization. In the current-potential response curve obtained when the linear potential sweeping was repeated in a range of -0.8 to +0.6V, a large and flat charge-discharge current whose main component was the capacitor component was observed. From this fact, it is expected that the EDOT polymer thin film has a high electron conductivity in this potential range.

Next, in a similar manner to that of Example 2, the redox response with DMcT was examined. The results of the evaluation by the CV measurement indicated that the electrode had substantially the same response as that of Example 2. However, the ratio between the first and second waves in size was different from that of Example 2, and there was such a tendency that the first wave was larger in this example that used the chemical oxidizing agent. This is considered to be due to the structure of the EDOT polymer. However, from the results of the evaluation described above, it was imagined that the EDOT polymer synthesized with use of the chemical oxidizing agent had substantially the same electrochemical activity as that of the EDOT polymer synthesized by the electrolytic polymerization method.

### Example 7

Since V₂O₅ xerogel is an intercalation compound that has appropriate intercalation spacing, it is possible to insert monomers between the layers. Further, V₂O₅ has a high oxidation-reduction potential and therefore has a high oxidizing ability. For these reasons, the inventors considered that it would be possible to synthesize a highly structurally regulated polymer can be synthesized by oxidatively polymerizing the EDOT monomers intercalated between the layers of the V₂O₅ xerogel. Based on this hypothesis, the following synthesis was carried out for trial, and as a result, it was found that PEDOT could be synthesized. It should be noted here that the said polymer exhibits an electrical conductivity and redox activity.

First, 6g of methavanadic acid (NaVO₃) was well dissolved into 500 mL of distilled water and then the solution was allowed to pass through an ion exchange resin column, thereby preparing an aqueous solution of methavanadic acid HVO₃. The HVO₃ aqueous solution was allowed to react slowly under atmospheric pressure over 5 days, and thus an aqueous solution in which gel materials was obtained. Next, the aqueous solution was dripped on a glass plate to vaporize the water for drying, thereby obtaining V₂O₅ xerogel as a solid compound. The water content of the V₂O₅ xerogel was about 15% by weight.

Next, the above-described synthesized material, V₂O₅ xerogel, and EDOT monomer were added to pure water and well mixed together by stirring, and the mixture was slowly reacted over 3 hours to 7 days. As a result, it was confirmed that the polymer of EDOT was prepared in the V₂O₅ xerogel. The EDOT polymer in the V₂O₅ xerogel was, after the V₂O₅ xerogel containing the product of the EDOT polymer was filtrated out, added to a 2% by weight NaOH aqueous solution and reacted for about 20 hours while stirring. Powder of the EDOT polymer could be obtained by eluting the V₂O₅ xerogel into the solution and filtration. The infrared absorption spectrum of the EDOT polymer thus synthesized was measured, and it was found that it had exactly the same absorption peak as that prepared by the electrolytic polymerization method. Therefore, it was concluded that these EDOT polymers had the same chemical structure. The powder of thus generated EDOT polymer was subjected to a gel chromatography measurement, and the results indicated that the molecular weight thereof was 2000 to 2400. Synthesizing conditions such as temperature, monomer concentration, mixting ratio and reaction time were changed, and the synthesis was carried out under various conditions for trials. The results of the GCP were substantially the same. It was imagined that the polymerization reaction of EDOT progressed between the layers. Therefore, the EDOT polymer thus obtained is expected to have a high electrical conductivity and a high redox response function.

Next, an electrode coated with a film of the EDOT polymer was prepared, and the electrochemical properties was evaluated. The electrode for evaluation was prepared in the following manner. An N-methyl-2-pyrrolidinone (NMP) solution of the EDOT polymer was prepared with an NMP solution to have an appropriate concentration, and 1 to 2 µL of the prepared solution was dripped onto a surface of a glassy carbon disk electrode having a diameter of 3 mm with use of a micro-syringe. After that, it was dried using a vacuum oven, and thus the electrode for evaluation was obtained.

The electrochemical properties of the respective electrode were evaluated from the CV method. The evaluation was carried out in a 3-electrode cell with a coil platinum wire used as the counter electrode and a silver/silver ion reference electrode used as the reference electrode. As the internal reference solution in the silver/silver ion reference electrode, a 0.05M acetonitrile solution of silver perchlorate was used.

The CV measurement was carried out in an acetonitrile solution containing 0.1M of NaClO₄ as the supporting electrolyte. It was found from the results of the measurement that the electrode exhibited exactly the same properties as those of Example 1 in which the measurement was carried out with use of the PEDOT electrode prepared by the electrolytic polymerization. In the current-potential response curve obtained when the linear potential sweeping was repeated in a range of -0.8 to +0.6V, a large and flat charge-discharge current whose main component was the capacitor component was observed. From this fact, it is expected that the EDOT polymer thin film has a high electron conductivity in this potential range.

Next, in a similar manner to that of Example 2, the redox response with DMcT was examined. The results of the evaluation by the CV measurement indicated that the electrode had exactly the same response as that of Example 2.

From the results of the evaluation described above, it was judged that PEDOT synthesized with use of the V₂O₅ xerogel had substantially the same electrochemical activity as that of the PEDOT polymer synthesized by the electrolytic polymerization method.

### Example 8

3-phenylthiophene (3PT) was added to an acetonitrile electrolyte solution containing 0.2M tetraethylammonium tetrafluoroborate ((C₂H₅)₄NBF₄) as the supporting electrolyte to reach the 3PT monomer concentration of 20 mM. Thus obtained solution was used as a solution for electrolytic polymerization. By electrolytic oxidation, a platinum electrode coated with a film of a polymer (PPT) of 3-phenylthiophene was prepared. With use of a platinum disk electrode having a diameter of 1.6 mm as the working electrode, a silver/silver ion electrode as the reference electrode and a platinum coil as the counter electrode, the potential sweeping was carried out between +0.2 to +1.05V in a 3-electrode cell. The sweeping speed was 20 mV/sec and the sweeping was repeatedly carried out. The electrolysis was carried out so as to have a current electricity amount of 0.32C.

The properties of thus prepared PPT coated platinum electrode was evaluated by the CV measurement using an acetonitrile solution containing 0.2M of (C₂H₅)₄NBF₄ as the supporting electrolyte. The voltammogram obtained exhibited well reversible oxidation-reduction waves at +0.68V and -2.05V. According to a report by Onoda et al. (Synthetic Metals, vol. 275, 55 to 57 (1993)), the wave at +0.68V indicates a redox reaction that involves anion mass-transfer, whereas the wave at -2.05V indicates a redox reaction that involves cation mass-transfer. These redox responses are reversible and good repeatable results were obtained.

Therefore, the above-described polymer film was prepared on a platinum foil having a square shape of 3 × 3 cm, and thus an electrode having a film thickness of about 1 µm was prepared. A cell for evaluation was prepared as in a similar manner to that of Example 5 except that this PPT coated platinum electrode was used in place of the metal lithium foil negative electrode, and a similar test was carried out. In this example, the acetonitrile solution containing 0.2M of (C₂H₅)₄NBF₄ as the supporting electrolyte was used as the electrolyte solution. A separator was interposed between the negative electrode and the positive electrode.

The constant current electrolysis (CC mode) was carried out and it was found that the obtained cell exhibited battery properties having a flat output potential of 1.6 to 1.7V.

Thus, it has been found that the positive electrode of the present invention, when combined with a non-lithium negative electrode, exhibits redox secondary battery properties capable of excellent charging and discharging.

Further, even when a polyacene coated electrode was used as the negative electrode in place of the PPT film coated electrode (see Yata et al., Synthetic Metals, vol. 18, 645, (1987)), similar properties to those obtained with use of the PPT film coated electrode were obtained. The output potential was 1.8 to 2.0V.

As described above, according to the present invention, there is provided a redox active reversible electrode that can discharge a practically applicable large current from an initial stage of charging-discharging even at a room temperature. The lithium secondary battery and redox secondary battery which employ the redox active reversible electrode of the present application exhibit charging-discharging characteristics of a high energy density at low and high temperatures, and also capacitor characteristics as well.

## Claims

1. A redox active reversible electrode comprising an electrically conductive substrate and a redox active film formed on at least one surface of the conductive substrate, wherein the redox active film comprises a redox active sulfur compound and an electrically conductive polymer of a π electron conjugated compound having p-type doping characteristics.

2. The electrode according to claim 1, **characterized in that** the sulfur compound is an inorganic sulfur compound or an organic sulfur compound.

3. The electrode according to claim 2, wherein the sulfur compound is at least one selected from the group consisting of a carbon disulfide compound represented by (S)ₓ^{m-} (where x is 1 to 8 and m is 0 to 2) or (SCS)ₙ (where n is 1 to 10), 2-mercaptoethylether, 2-mercaptroethylsulfide, 1,2-ethanediole, tetrathioethylenediamine, N,N'-dithio-N,N'-dimethylethylenediamine, trithiocyanuric acid, 2,4-dithiopyridine, 4,5-diamino-2,6-dimethylmercapto-1,3,4-thiadiazole, the compounds represented by the following formulas (1) to (5) : 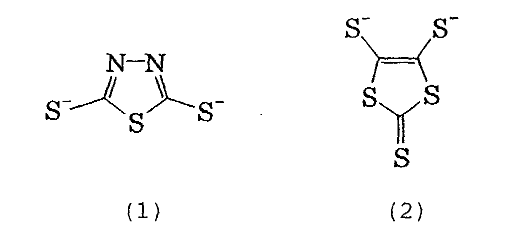 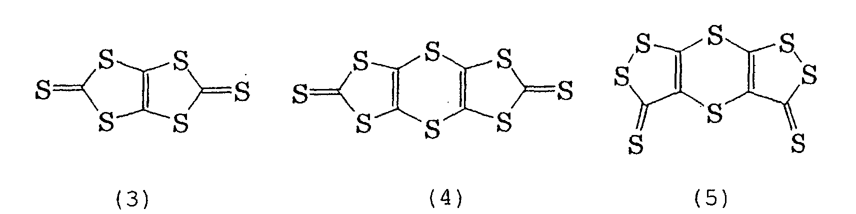 and polymers thereof.

4. The electrode according to claim 1, wherein the conductive polymer comprises a polythiophene compound.

5. The electrode according to claim 4, wherein the polythiophene compound has a repeating unit represented by the following formula (I): 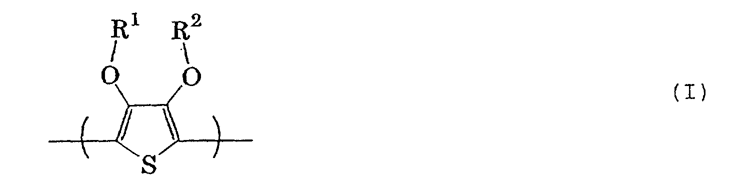 where R¹ and R² are independently hydrogen or an alkyl group containing 1 to 4 carbons, or may bond to each other to form an alkylene group having 1 to 4 carbons, which may be substituted, 1,2-cyclohexene group or o-xylylene group.

6. The electrode according to claim 4, wherein the polythiophene compound is obtained by oxidative polymerization of a thiophene compound represented by the following formula (II): 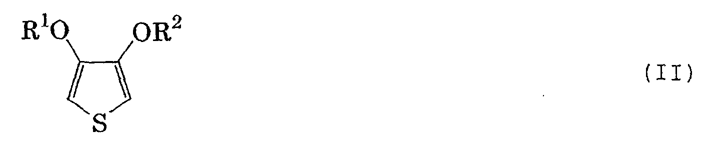 where R¹ and R² are independently hydrogen or an alkyl group containing 1 to 4 carbons, or may bond to each other to form an alkylene group having 1 to 4 carbons, which may be substituted, 1,2-cyclohexene group or o-xylylene group.

7. The electrode according to claim 4, **characterized in that** the polythiophene compound has a repeating unit represented by the following formula (III): 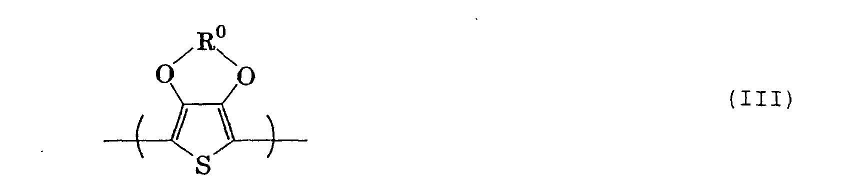 where R⁰ represents -(CH₂)₂-, -CH₂CH(CH₃)-, -CH₂CH(C₆H₁₃)-, -CH₂CH(C₁₀H₂₁)-, -CH₂CH(C₁₄H₂₉)-, -CH₂CH(phenyl)-, -(CH₂)₃-, -CH₂CH(CH₃)CH₂-, -(CH₂)₄-, o-xylene, -CH₂CH(OH)-, -CH₂CH(CH₂O-(CH₂CH₂)₃-S-trimethylthiotetrathiafulvalene)-,
-CH₂CH(CH₂O-(CH₂CH₂O)₅-CH₂CH₂-S-trimethylthiotetrathiafulvalene)-, or
-CH₂CH(CH₂O(CH₂)₃SO₃-Na⁺).

8. The electrode according to claim 4,
wherein the polythiophene compound is derived from the oxidative polymerization of: (E)-1,2-bis(2-(3,4-ethylenedioxy)thienyl)vinylene, 1,4-bis(2-(3,4-ethylenedioxy)thienyl)benzene, 4,4'-bis(2-(3,4-ethylenedioxy)thienyl)biphenyl, 2, 5-bis (2- (3, 4-ethylenedioxy) thienyl) furan, 2,5-bis(2-(3,4-ethylenedioxy)thienyl)thiophene, or 2,2':5',2"-ter(3,4-ethylenedioxy)thiophene.

9. The electrode according to claim 1, **characterized in that** the redox active thin film contains conductive particles in an amount of 1 to 15% by weight.

10. The electrode according to claim 9, **characterized in that** the redox active thin film contains the conductive particles dispersed in a mixture of the conductive polymer material and sulfur compound.

11. A lithium secondary battery comprising a positive electrode, a lithium negative electrode and an electrolyte layer interposed between the positive electrode and the negative electrode, wherein the positive electrode is provided by the redox active reversible electrode according to claim 1.

12. A lithium-based device comprising a positive electrode, a lithium negative electrode and an electrolyte layer interposed between the positive electrode and the negative electrode, wherein the positive electrode is provided by the redox active reversible electrode according to claim 1, and the lithium-based device can exhibit capacitor properties by controlling an application potential and/or cut-off potential while charging.

13. A lithium secondary battery comprising a positive electrode, a non-lithium redox active negative electrode and an electrolyte layer interposed between the positive electrode and the negative electrode, wherein the positive electrode is provided by the redox active reversible electrode according to claim 1.

14. A redox device comprising a positive electrode, a non-lithium redox active negative electrode and an electrolyte layer interposed between the positive electrode and the negative electrode, wherein the positive electrode is provided by the redox active reversible electrode according to claim 1, and the redox device can exhibit capacitor properties by controlling an application potential and/or cut-off potential while charging.
